# EUROPEAN PATENT SPECIFICATION

(11) **EP 1 182 249 B1**
(45) Date of publication and mention of the grant of the patent: **10.01.2007**
(21) Application number: 00925636.3
(22) Date of filing: 12.05.2000
(51) Int. Cl.: C10L 3/06, C01B 3/22, C10L 3/08

(54) **PROCESS FOR PRODUCING TOWN GAS**
VERFAHREN ZUR HERSTELLUNG VON STADTGAS
PROCEDE DE PRODUCTION DE GAZ DE VILLE

(30) Priority: 26.05.1999 JP 14694399
(43) Date of publication of application: 27.02.2002
(73) Proprietor: JGC Corporation, Tokyo 100-0004 (JP); MITSUBISHI GAS CHEMICAL COMPANY, INC., Chiyoda-ku, Tokyo 100-8324 (JP); ITOCHU CORPORATION, Minato-ku, Tokyo 107-8077 (JP)
(72) Inventor: ISHIGAKI, Shinya JGC Corp., Res. Dev. Ctr., Higashi Ibaraki-gun Ibaraki 311-1313 (JP); YAMADA, Nobuhiro JGC Corp., Res. Dev. Ctr., Higashi Ibaraki-gun Ibaraki 311-1313 (JP); MASHIKO, Yoshinori, Nishi-ku, Yokohama-shi, Kanagawa 220-600 (JP); YOSHIMI, Shouji, Nishi-ku, Yokohama-shi, Kanagawa 220-600 (JP); YONEOKA, Mikio Mitsubishi Gas Chem. Inc., Niigata-shi Niigata 950-3112 (JP); HASHIMOTO, Osamu, Niigata-shi Niigata 950-3121 (JP); ISHIWADA, Akira, Chiyoda-ku Tokyo 100-8324 (JP); OTSUKA, Hisashi, Chiyoda-ku, Tokyo 107-8077 (JP)
(74) Representative: Pilch, Adam John Michael
(86) International application number: PCT/JP2000/003048
(87) International publication number: WO 2000/073404

(56) References cited:
- EP-A1- 0 761 942
- WO-A1-99/17875
- FR-A- 2 209 735

## Description

### Technical Field

This invention relates to a method for producing town gas, and more particularly to a method for producing town gas containing methane as a main component using dimethyl ether as feed stock.

### Background Art

Recently, in the major cities, town gas is obtained by evaporating liquefied natural gas (LNG). However, to produce town gas from LNG requires the facilities for maintaining the received LNG at extreamly low temperature under -162 °C and for evaporating the LNG to produce town gas. Accordingly, it is not suitable for small or medium-sized businesses to produce town gas from LNG. Further, it is forecasted that LNG becomes scarce in resources in the near future. Accordingly, it is desired that town gas is made from feed stock except LNG or, from substitute natural gas (SNG). And so various methods for producing town gas have been proposed.

### ① Methods using hydrocarbons as feed stock;

There are methods for producing town gas from hydrocarbons, such as liquefied petroleum gas (LPG) and naphtha. JP-A-58 124541 discloses a method for producing gas containing methane (CH₄) as a main component, hydrogen (H₂), carbon dioxide (CO₂) and carbon monoxide (CO), by means of steam reforming of hydrocarbons of carbon number 2 to 14 with the catalyst containing nickel, cerium and alumina. And JP-A-55144089 discloses a method for producing gas containing methane as a main component, by means of steam reforming of heavier hydrocarbons with the catalyst containing ruthenium. Further, JP-A-62 017 003 discloses a method for producing gas containing methane as a main component, by means of steam reforming of desulfurized hydrocarbons with the catalyst containing ruthenium.

### ② Methods using alcohols as feed stock;

There are methods for producing town gas from alcohols, such as methanol (CH₃OH) or mixture of methanol and water (H₂O). JP-A-52 044 802 discloses a method for producing fuel gas of higher heating value where a gas containing methane, hydrogen, carbon dioxide and carbon monoxide, is produced by contacting methanol or mixture of methanol and water with the catalyst containing ruthenium, followed by methanation of those produced hydrogen and carbon monoxide. And JP-A-62 156 196 discloses a method for producing methane by a single step by contacting methanol or a mixture of methanol and water with the catalyst containing ruthenium and lanthanum as essential components.

Further, JP-A-1234499 discloses a method for efficiently evaporation of liquid phase methanol and water, which are heated by the heat of outlet gas of a reactor and are contacted directly with recycled gas. JP-A-1304184 discloses a method for separating carbon dioxide from gas produced by the reaction between alcohol and steam, using liquid phase alcohol. JP-A-3 123 737 discloses a reactor of the type which recovers reaction heat to utilize this evaporation and preheat of feed stock.

And, we have not been able to find out the Prior Arts regarding a method for producing town gas from dimethyl ether as feed stock.

The above methods ① using hydrocarbons as feed stock require the facilities for desulfurization, supply of hydrogen used for the desulfurization, and hydrogen recycle, since such hydrocarbons as naphtha contain sulfur compounds. Further, sulfur in hydrogen sulfide produced on desulfurization process, is generally fixed as zinc sulfide. It cannot help treating the zinc sulfide as industrial wastes since zinc sulfide is difficult to decompose and reuse, which causes environmental problems in the future.

The above methods ② use methanol as feed stock in many cases. Since methanol has been desulfurized in the course of production, desulfurization facilities are not newly required in these methods. In this respect, these methods are superior to the above methods using hydrocarbons as feed stock. However, producing town gas from methanol is carried out according to the following reaction equation, theoretically;

CH₃OH → 0.75CH₄ + 0.25CO₂ + 0.5H₂O

That is, 0.75 mol carbon element in CH₃OH is converted into CH₄, and 0.25 mol of that are converted into CO₂. At this time, 0.5 mol of H₂O (water corresponding to 28% of the weight of methanol) is also produced. In point of transportation of feed stock, it is not economical since potentially reproduced water, not being fuel, is transported. Further, on the production of town gas, it is needed to evaporate the water when evaporating methanol. Accordingly, energy is unnecessarily consumed. Furthermore, it requires liquefied petroleum gas as carburant to make the town gas.

Accordingly, it is an object of this invention to provide a method for producing town gas, in which sulfur component is not contained in feed stock, so desulfurization facilities are unnecessary, and cryogenic storage facilities are also unnecessary, and transport efficiency is higher, and extra energy is not consumed on the evaporation process of feed stock, and liquefied petroleum gas is unnecessary as carburant, and which is suitable for small or medium-sized businesses to carry out.

### Disclosure of the invention

The above object can be achieved by the method of producing town gas, of claim 1, using dimethyl ether (CH₃OCH₃ or C₂H₆O) as feed stock.

The present invention provides a method for producing town gas comprising the steps of:
(A) preparing dimethyl ether as feed stock;
(B) evaporating said dimethyl ether; and
(C) reforming said dimethyl ether with steam in the presence of catalyst to produce reformed gas containing mainly methane, wherein the catalyst contains ruthenium or the catalyst contains nickel, cerium and alumina.

The dimethyl ether used for feed stock can be crude dimethyl ether containing alcohols which contain methanol as the main component, and/or water. Such a method for producing town gas is carried out according to the following reaction equation, theoretically:

C₂H₆O → 1.5CH₄ + 0.5CO₂

Coexistent steam functions to suppress temperature rise of reaction system.

It is evident from the above reaction equation that 0.75 mol of carbon element in 1 mol C₂H₆O is converted into CH₄, and 0.25 mol of that are converted into CO₂, which is similar to the case using methanol as feed stock. However, this method using dimethyl ether is efficient and advantageous from view of transportation, since H₂O is not reproduced. Further, heat energy is not unnecessarily consumed on the evaporation process of the feed stock.

In a method for producing town gas, of claim 2 according to claim 1, quantity of the steam for catalytic reforming is within 10/1 to 0.5/1 molar ratio of steam/dimethyl ether. Necessary quantity of the steam is ordinarily obtained by means of introduction into the reaction system from outside. However, in the case the dimethyl ether contains water beyond some quantity, the steam to be introduced from the outside may be unnecessary. The quantity of the coexistent steam to suppress the temperature rise of the reaction system is reduced and the consumption of heat energy is reduced in the method for producing town gas according to claim 2.

In a method for producing town gas, of claim 3 according to claim 1, the temperature for the catalytic reforming of the dimethyl ether is within 200 °C to 600 °C, and preferably within 250 °C to 550 °C. Such a method prevents deactivation of the catalyst caused by excess temperature rise of the reaction system.

In a method for producing town gas, of claim 4 according to claim 1, dimethyl ether is supplied to serially installed adiabatic fixed bed reactors, under the existence of steam, by one of the following manners;
① Passing cooling means installed between the reactors, dimethyl ether is supplied serially to the reactors;
② A part of divided dimethyl ether is supplied to the reactors serially, and at the same time, the remaining part of the divided dimethyl ether is supplied to the subsequent reactors.
Such a method suppresses excess temperature rise of reaction system caused by heat of the reforming reaction in the case of using adiabatic fixed bed reactor.

In a method for producing town gas, of claim 5 according to claim 1, dimethyl ether is reformed with fluidized bed reactor or multi-tubular reactor which is in a form of the single stage or the plural stages. Such a method for producing town gas prevents excess temperature rise of reaction system by simplified equipment.

In a method for producing town gas, of claim 6 according to claim 1, by-produced carbon dioxide is removed from the reformed gas of dimethyl ether. Such a method produces gas of higher heating value not containing incombustible gas.

In a method for producing town gas, of claim 7 according to claim 6, carbon dioxide is removed using any of the following manners;
① Absorption by aqueous alkanolamine solution or heated aqueous potassium carbonate solution;
② Adsorption by pressure swinging;
③ Selective separation by membrane.
Such a method surely removes carbon dioxide from the reformed gas.

In a method for producing town gas, of claim 8 according to claim 1, hydrogen, carbon monoxide and carbon dioxide, which are by-produced on reforming process of dimethyl ether, are methanized either before or after removing carbon dioxide from the reformed gas. Such a method increases furthermore the heating value of the produced reformed gas.

In a method for producing town gas, of claim 9 according to claim 1, dimethyl ether used for feed stock is added to the produced reformed gas as carburant. Special facilities for storage or supply of carburant is unnecessary in contrast to such other carburant as liquefied petroleum gas, and heating value of product gas can be controlled so as to adjust to the standardization.

### Brief Description of Drawings

Fig.1 is the first product flow scheme, as one example which is applied to the embodiment of this invention.
Fig.2 is the second product flow scheme, as another example which is applied to the embodiment of this invention.
Fig.3 is the third product flow scheme, as a further example which is applied to the embodiment of this invention.

### Best Mode for Carrying Out the Invention

As above described, a method for producing town gas according to this invention comprises the steps of; using dimethyl ether as feed stock; evaporating the dimethyl ether and; reforming the dimethyl ether with steam in the presence of catalyst to produce reformed gas containing mainly methane .

Conventionally, dimethyl ether is produced by dehydration of methanol which is produced in advance. However, in recent years, the dimethyl ether tends to be directly produced by the reaction between hydrogen and carbon monoxide as following equation;

4H₂+2CO → CH₃OCH₃+H₂O

In this reaction, CH3OH is sometimes by-produced besides H₂O. In this invention, not only pure dimethyl ether but also crude dimethyl ether containing alcohols of which main component is methanol, and/or water, can be used for feed stock. Since dimethyl ether does not contain sulfur components, similar to methanol, desulfurization facilities are unnecessary on the production of the town gas. Further, since the boiling point of dimethyl ether is -25.1 °C, which is close to that of methanol, the cryogenic storage facilities as needed for LNG, is unnecessary. -

Any methods can be adopted to reform dimethyl ether catalytically under the existence of steam. The gas containing mainly methane is produced with the reaction shown in equation (1), by means of reforming the dimethyl ether catalytically within 200 °C to 600 °C, and preferably within 250 °C to 550 °C of temperature, using well-known catalysts for reforming hydrocarbon, such as the catalyst containing ruthenium (Ru) disclosed in JP-A-62017003, or the catalyst containing nickel (Ni), cerium (Ce) and alumina (Al₂O₃) disclosed in JP-A-62051134,

C₂H₆O → 1.5CH₄+0.5CO₂ (1)

In practice, H₂ and CO are also produced besides CH₄ and CO₂ produced with the reaction equation (1). Simultaneously, the following equation (2), (3) and (4) proceed;

CO+3H₂ → CH₄+H₂O (2)

CO+H₂O → CO₂+H₂ (3)

CO₂+4H₂ → CH₄+2H₂O (4)

Accordingly, when dimethyl ether is reformed catalytically, the reformed gas contains H₂, CO, CO₂, H₂O, and mainly CH₄. Compositions of the reforming gas vary with the reaction temperature, catalysts and so on. The compositions of the reformed gas besides H₂O, are about 50~70% CH₄, 20~25% CO₂, 10~30% H₂ and 0~3% CO.

In the case that the catalyst containing nickel is used for the reforming or methanation, generally the reduction treatment of the catalyst with hydrogen is required in advance. Accordingly, the hydrogen supply facilities are needed similarly to the case of producing the town gas from LPG. However, they can be simplified because they are not used for the desulfurization in contrast to the case of LPG. And also hydrogen recycling facilities are unnecessary. In recent years, some commercially supplied catalysts are stabilized by partial reduction. When such catalyst is used, the hydrogen supply sources are not always necessary.

The reforming reaction of the equation (1) is highly exothermic. Hence, when the temperature of the reaction system rises excessively, the reforming reaction of the equation (1) becomes not to proceed toward right side due to chemical equilibrium. Besides, there is a possibility of the side reaction which produces ethylene (C₂H₄) as the following equation;

C₂H₆O → C₂H₄+H₂O

Ethylene deposits resinous material on the surface of the catalyst and prevents the reforming reaction. Accordingly, it is desirable to control the reaction temperature within the above temperature range by cooling the reaction system adequately. In this invention, steam coexists for reforming reaction of dimethyl ether. The principal purpose of coexistence of steam is to suppress the temperature rise of the reaction system.

However, the coexistence of the steam requires extra thermal energy for heating or cooling the steam, in the whole of the production process of the town gas. Accodingly, it is not economical that quantity of the steam is beyond 10/1 mole ratio (steam/dimethyl ether). And preferable quantity of the steam is under 10/1, and more preferably under 5/1 ratio. However, it becomes difficult to suppress the temperature rise of the reaction system when quantity of the steam is under 0.5/1 ratio. Accordingly, most preferable quantity of the steam is the within 1/1~2/1 ratio in consideration of the steam quantity to be used and easiness of temperature control of the reaction system.

As a reactor used for the reaction process of reforming dimethyl ether catalytically, there can be used an adiabatic fixed bed reactor which has no internal cooling means. In this case, special considerations are required for keeping the reaction temperature within the preferable range.

For example, dimethyl ether is supplied to plurally and serially installed adiabatic fixed bed reactor filled with catalyst, under the existence of steam, according to the following manners; ① passing cooling means installed between the reactors, dimethyl ether is serially supplied to the reactors, or ② dimethyl ether is divided into two or more, and a part of dimethyl ether is serially supplied to the reactors, and at the same time, the remains of part of dimethyl ether is supplied to the subsequent reactors.

Besides, when a fluidized bed reactor or a multi-tubular reactor is used for reforming dimethyl ether, the temperature of the reaction system is sufficiently cooled down. It may be used in single stage. The fluidized bed reactor has a perforated plate under a fluidized layer of powdery catalyst. The powdery catalyst is fluidized by introduction of feed gas through the perforated plate and is cooled down by internal cooling means. The multi-tubular reactor has many reaction tubes filled with catalyst. The outside of the reaction tubes is formed as a jacket and is flowed with medium for cooling the catalyst. In the case that the fluidized bed reactor or the multi-tubular reactor is used for reforming dimethyl ether, the temperature of reaction system can be easily controlled with the coexistence of steam.

After reforming dimethyl ether, incombustible carbon dioxide is removed from the reformed gas. Any method for removing carbon dioxide can be adopted. In this invention, one of the following proven methods is preferably adopted.
① Absorption by aqueous alkanolamine solution (HORNH₂) or heated aqueous potassium carbonate solution (K₂CO₃);

   HORNH₂+H₂O+CO₂ → HORNH₃HCO₃ (5)

   K₂CO₃+H₂O+CO₂ → 2KHCO₃ (6)

   Both reactions are reversible and absorbent can be regenerated.
② Adsorption by pressure swinging;
   CO₂ is adsorbed on silica gel, molecular sieve or active carbon under higher pressure and desorbed under the atmospheric or lower pressure.
③ Selective separation by membrane;
   Only CO₂ can be separated selectively from the mixture of CH₄ and CO₂ by membrane having a large permeability of CO₂, such as polyimide, cellulose ester, polysulfon membranes.

Besides the removal of carbon dioxide, preferably, methanations of carbon monoxide, hydrogen and carbon dioxide, which are by-produced on the reforming process of dimethyl ether, are carried out to increase the heating value. The methanations of CO, CO₂ and H₂ are carried out with the catalyst, preferably containing alumina, nickel and barium oxide (BaO) as disclosed in JP-A-59062345, besides the catalyst containing nickel and cobalt (Co) as disclosed in JP-A-52 044 802 And the methanation may be carried out either before or after eliminating carbon dioxide.

Further, dimethyl ether used as feed stock may be added as carburant, to the reformed gas. In the case that the heating value of the town gas is standardized, the heating value of the reformed gas is adjusted to the standardized heating value by adding some quantity of the carburant. Dimethyl ether used for carburant may be at the gaseous state or at the liquid state. In the case that dimethyl ether is at the liquid state, it is added to the reformed gas through vaporizer.

Table 1 shows various characteristics of the town gas produced from dimethyl ether, comparing with the town gas produced from methanol.

**(Table 1) Comparison of various characteristics on producing of fuel gas.**

| feed stock | dimethyl ether | methanol |
|---|---|---|
| theoretical reaction equation | C₂H₆O → 1.5CH₄+0.5CO₂ | CH₃OH → 0.75CH₄+0.25CO₂+0.5H₂O |
| heat of reaction | 30.8 | 17.7 |
| (kcal/mol-feed stock) | | |
| latent heat of vaporization | 5.14 | 8.43 |
| (kcal/mol-feed stock) | | |
| liquid density | 668 | 790 |
| ( kmol/m³-transport liquid) | | |
| storage density | 14.5 | 24.7 |
| ( kmol/m³-transport liquid) | | |
| amount of theoretical formation of methane ( Nm³ methane/m³-transport liquid) | 488 | 415 |

It is apparent from Table 1 that the latent heat of vaporization of dimethyl ether is smaller than that of methanol, and so the heat energy for vaporization of dimethyl ether is smaller than that of methanol. Further, in the theoretical value of the product of methane per unit volume of transported liquid, dimethyl ether is larger than methanol. In this respect, dimethyl ether is superior to methanol as feed stock to be transported. Furthermore, the heat of dimethyl ether on reforming is larger. Accordingly, there can be more efficiently used the heat of the reforming reaction for vaporization and heating of dimethyl ether as feed stock. As above described, it is more beneficial to use dimethyl ether as feed stock of town gas.

Next, a method for producing town gas according to embodiments of this invention will be described with reference to the drawings. Hereafter, "DME will mean the abbreviation of "dimethyl ether".

### (First embodiment of this invention)

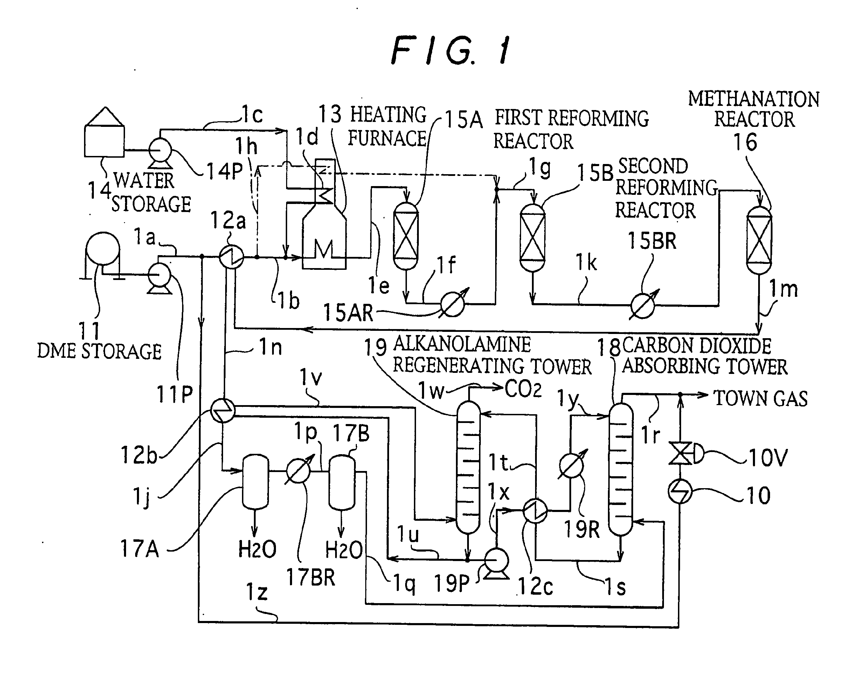

Fig.1 shows a product flow scheme of town gas according to this embodiment. Two adiabatic fixed bed reactors are serially installed for reforming reaction. In Fig.1, DME, sucked with a pump 11P from a DME storage 11 to a conduit 1a, is evaporated in a heat exchanger 12a and the DME is supplied into a bottom portion of a heating furnace 13 through a conduit 1b.

On the other hand, water, sucked with a pump 14P from a water storage 14, is supplied into the heating furnace 13 through a conduit 1c and the water is steamed up at a portion 1d of the conduit 1c which passes the heating furnace 13. The steam is led into the conduit 1b and then the steam and the DME are joined there. That is, DME is supplied into the bottom portion of the heating furnace 13 together with the steam and heated therein. Then, the DME is supplied through a conduit 1e into a first reforming reactor 15A which is an adiabatic fixed bed reactor. The first reforming reactor 15A does not have any internal cooling means. Further, the DME contacts with catalyst which fills the reactor 15A, and then the DME is reformed with reaction as the above equations (1), (2), (3) and (4).

Gas which is led out from the first reforming reactor 15A through a conduit 1f is intermediately cooled in a cooler 15AR and then the gas is supplied through a conduit 1g into a second reforming reactor 15B which is an adiabatic fixed bed reactor. In the second reforming reactor 15B, the gas is reformed catalytically like the first reforming reactor 15A, additionally. Reformed gas which is led out from the second reforming reactor 15B into a conduit 1k, is cooled in a cooler 15BR installed on the way of the conduit 1k, and then the reformed gas is supplied to a methanation reactor 16.

The reason that the reforming reaction of DME is divided into two, by supplying DME into the first and second reforming reactor 15A, 15B together with the steam, is to prevent depositing resinous materials on the surface of the catalyst in the reactors and deactivation of the catalyst due to sintering, besides the fact that the reforming reaction of DME shown by the above equation (1) becomes not to proceed toward right side in chemical equilibrium when the temperature of the reaction system rises excessively with heat of the reforming reaction which is exothermic reaction. In this respect, reforming reactors may be installed serially three or more. Further, in the case that DME contains water enough, a process flow which does not introduce the steam from outside, is applicable, omitting the water storage 14, the pump 14P and the conduits 1c, 1d from Fig.1.

DME is supplied serially into the first and second reforming reactors 15A,15B in the above. However, a part of DME may be supplied serially into the first and second reforming reactors 15A,15B, and at the same time, another part of DME may be directly supplied into the second reforming reactor 15B.

Referring to Fig.1, DME from the DME storage 11 is divided into two at a downstream point of the heat exchanger 12a. A part of the divided DME is heated at a top of the heating furnace 13 through a conduit 1h and then is supplied into the second reforming reactor 15B through the conduit 1g together with the outlet gas of the first reforming reactor 15A.

According to such a manner, it is possible to more equalize the load distribution between the first and second reforming reactors 15A, 15B. Equalization of reaction temperature can be facilitated. Further, there can be omitted introduction of the steam from outside when DME contains water sufficiently.

The reformed gas led into the methanation reactor 16 contacts the catalyst which fills the methanation reactor 16. Hydrogen,carbon monoxide and carbon dioxide, which are contained in the reformed gas, are converted into methane as the above equations (2) and (4), so that the heating value of the reformed gas increases. This methanation reaction is carried out under the conditions of a temperature of 250 to 400 °C and a pressure of 0.49 to 7.84 MPa (5 to 80 kgf/cm ²) in use of the catalyst known for methanation reaction, for example, a catalyst containing alumina, nickel and barium oxide, disclosed in JP-A-59 062345.

The methanation reactor 16 is shown as an adiabatic fixed bed reactor in Fig.1. Instead, it may be a fluidized bed reactor or a multi-tubular reactor.

The reformed gas from the methanation reactor 16 is led into a conduit 1m and exchanges heats with the feed stock DME in the heat exchanger 12a. And then the reformed gas is led into a heat exchanger 12b through a conduit 1n and is cooled therein. Further, the reformed gas is led into a condensing tank 17A through a conduit 1j and condensed water is separated. The condensed water is discharged from a bottom portion of the condensing tank 17A. Furthermore, the reformed gas is cooled in a cooler 17BR located at a portion of a conduit 1p which connects the condensing tank 17A and a condensing tank 17B, and condensed water is separated in the condensing tank 17B. The condensed water is discharged from a bottom portion of the condensing tank 17B.

The reformed gas from which moisture is separated, is led into a bottom portion of a carbon dioxide absorbing tower 18 through a conduit 1q. Aqueous alkanolamine solution is led into a top portion of the absorbing tower 18 through a conduit 1y and is poured towards the bottom portion of the absorbing tower 18. On the other hand, the reformed gas introduced into the tower 18 rises toward the top portion of the absorbing tower 18. Accordingly, there occurs the countercurrent gas-liquid contact between the reformed gas and the aqueous alkanolamine solution in the absorbing tower 18. Therefore, the carbon dioxide in the reformed gas is absorbed as expressed in the above equation (5).

Accordingly, the reformed gas from which carbon dioxide is removed, is obtained from the top portion of the absorbing tower 18 through a conduit 1r, as the source of town gas. The heating value of the source gas is controlled by means of addition of DME as carburant on the way of the extraction of the source gas so as to be used for town gas.

The DME as carburant is led into an evaporator 10 through a conduit 1z which branches off from the conduit 1a and the DME is evaporated therein. The evaporated DME is added to the conduit 1 r through a valve 10V.

In the case that the crude DME containing methanol, any other alcohols or water, is used for feed stock, it cannot be used as the carburant. Accordingly, it is necessary to add high-purity DME or any other carburants, separately.

The aqueous alkanolamine solution absorbing carbon dioxide at high concentration, is led into a conduit 1s from the bottom portion of the carbon dioxide absorbing tower 18. And then the solution is led into a top portion of an aqueous alkanolamine regenerating tower 19 through a heat exchanger 12c and the conduit 1s.

Liquid extracted from a bottom portion of the regenerating tower 19 is led into the heat exchanger 12b through a conduit 1u and is heated therein. And then the heated liquid is returned to the bottom portion of the regenerating tower 19 through a conduit 1v.

The aqueous alkanolamine solution is heated by the above means in the regenerating tower 19. Hence, the carbon dioxide absorbed in the aqueous alkanolamine solution is evolved and so the aqueous alkanolamine solution is regenerated.

The evolved carbon dioxide is discharged from the top portion of the regenerating tower 19 through a conduit 1w. On the other hand, the regenerated aqueous alkanolamine solution is discharged from the bottom portion of the regenerating tower 19 with a pump 19P. Then, the solution is led into a cooler 19R through a conduit 1x and the heat exchanger 12c, and is cooled therein. Further, the solution is returned to the top of the carbon dioxide absorbing tower 18 through the conduit 1y.

In the above description, the removal of carbon dioxide in the reformed gas is carried out with absorption by aqueous alkanolamine solution. However, any other methods can be adopted to remove the carbon dioxide.

### (Second embodiment of this invention)

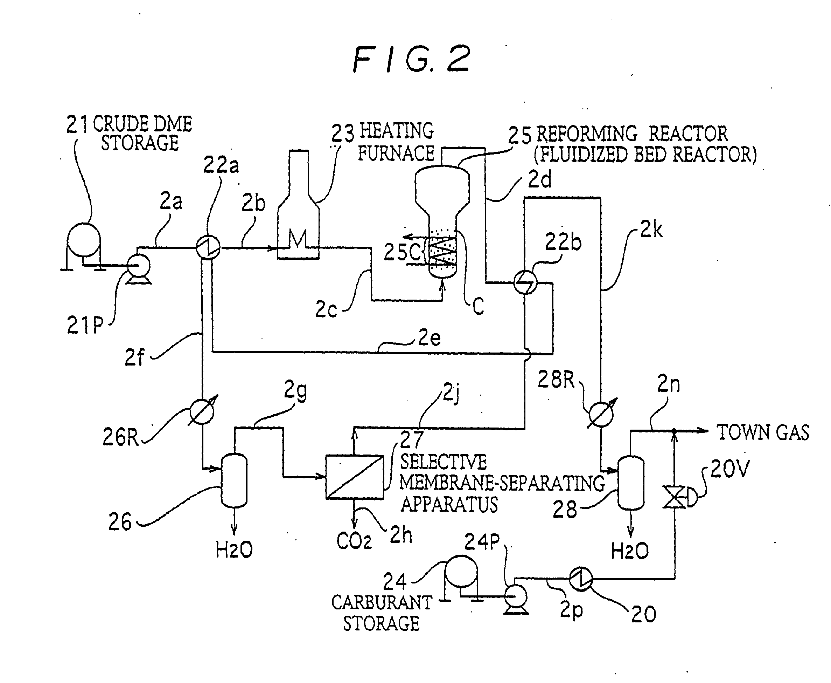

Fig.2 shows a product flow scheme of town gas according to this embodiment. In this embodiment, crude DME containing water is used for the feed stock of town gas and a fluidized bed reactor is adopted as a reforming reactor.

Referring to Fig.2, crude DME, sucked with a pump 21P from a crude DME storage 21 to a conduit 2a, is led into a heat exchanger 22a and is evaporated therein. And then the evaporated crude DME is led into a heating furnace 23 and is heated therein. The heated crude DME is led into a bottom portion of a fluidized bed reactor 25 through a conduit 2c. The fluidized bed reactor 25 has internal cooling means. In the fluidized bed reactor 25, the crude DME comes into contact with powdery catalysts, blowing up and fluidizing the powdery catalysts. Hence, the crude DME is reformed with the reactions, with the above equations (1),(2),(3) and (4). The components of catalysts, and the conditions of the temperature and pressure on the reforming reaction, are similar to those for the first embodiment of this invention.

The reformed gas is led into a heat exchanger 22b through a conduit 2d and is cooled therein. And then, the reformed gas is led into the heat exchanger 22a through a conduit 2e and is cooled therein. Further, the reformed gas is led into a cooler 26R through a conduit 2f and is cooled therein. Furthermore, the reformed gas is led into a condensing tank 26 and condensed water is separated therein. The condensed water is discharged from a bottom portion of the condensing tank 26.

The reformed gas in the condensing tank 26 is led into a selective membrane-separating apparatus 27 through a conduit 2g. In this apparatus, the reformed gas comes into contact with a selective separating membrane, which is made of polyimide, and the carbon dioxide is selectively separated from the reformed gas. That is, there is a filmy module composed of a bundle of a large number of hollow fibers, in the apparatus 27. These hollow fibers are about 1 mm in outside diameter. The reformed gas is supplied to the outside of the hollow fibers and only the carbon dioxide in the reformed gas permeates the wall of the hollow fibers. Hence, the carbon dioxide is led into the inside of the hollow fibers.

The separated carbon dioxide is discharged from the apparatus 27 through a conduit 2h. The reformed gas from which the carbon dioxide is removed, is led into a cooler 28R through conduits 2j,2k and a heat exchanger 22b and then the reformed gas is cooled therein. Further, the cooled reformed gas is led into a condensing tank 28 and condensed water separated in the condensing tank 28 is discharged from a bottom portion of the tank 28.

The reformed gas from which the condensed water is separated, is extracted through a conduit 2n as a source of town gas. The heating value of the source gas is controlled by addition of pure DME as carburant on the way of the extraction of the source gas so as to be used for town gas. That is, it is not possible to use crude DME as the carburant since the crude DME contains water. '

Referring to Fig.2, DME used for the carburant is sucked to a conduit 2p from a carburant storage with a pump 24P and then the DME is evaporated in an evaporator 20. Further, the evaporated DME is led into the conduit 2n through a valve 20V. Insteads, it is possible to use LPG as the carburant.

In the case that the fluidized bed reactor 25 is used for a reforming reactor, it is relatively easy to remove the reaction heat on the reforming reaction. While the method for producing town gas, which uses the crude DME as feed stock and which does not use the steam, has been described in this embodiment. It is apparently possible to use the steam to cool the reforming reaction system. Further, a method for removing the carbon dioxide is not restricted to the above mentioned. Furthermore, it is able to include the process of the methanation reaction between hydrogen, carbon monoxide and carbon dioxide in the reformed gas.

### (Third embodiment of this invention)

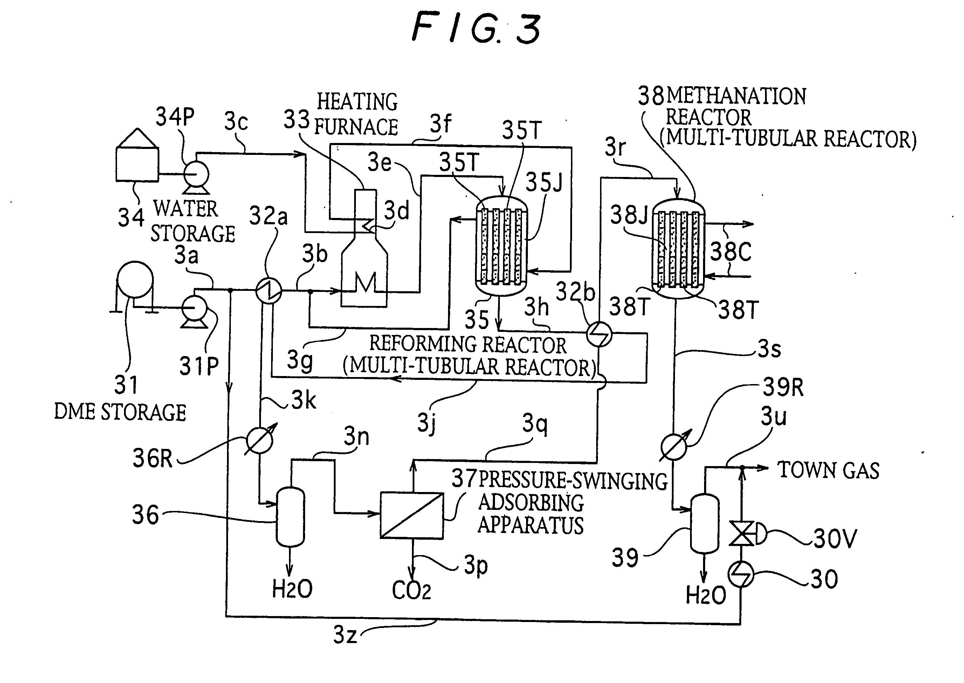

Fig.3 shows a third product flow scheme according to this embodiment. In this embodiment, multi-tubular reactors are used as the reforming reactors.

Referring to Fig.3, DME, sucked with a pump 31P from a DME storage 31 into a conduit 3a, is led into a heat exchanger 32a and is evaporated therein. And then the evaporated DME is led into a bottom portion of a heating furnace 33 through a conduit 3b and is heated therein. Further, the heated DME is led into many reaction tubes 35T arranged within a multi-tubular reactor 35.

On the other hand, water sucked with a pump 34P from a water storage 34 is led into the heating furnace 33 through a conduit 3c. The water is steamed up at a part 3d of the conduit 3c which goes through the heating furnace 33. And then the steam is led into a jacket 35J of the multi-tubular reactor 35 through a conduit 3f.

The multi-tubular reactor 35 consists of many reaction tubes 35T filled with catalysts, and the jacket 35J positioned at the outsides of those reaction tubes 35T.

Hot water or steam within the jacket 35J cools the reaction tubes 35T and is discharged through a conduit 3g. And then the hot water or the steam is led into the conduit 3b in which DME flows.

That is, the DME within the conduit 3b is led into the bottom portion of the heating furnace 33 together with the steam and is heated therein. And then the DME is led into the multi-tubular reactor 35 through the conduit 3e and contacts with the catalysts within the reaction tubes 35T. In consequence, the DME is reformed in accordance with the above reaction equations (1),(2),(3) and (4).

The catalysts with which the reaction tubes 35T are filled, and a temperature and pressure of the reforming reaction are similar to those for the first embodiment.

The reformed gas extracted through a conduit 3h is led into a conduit 3j through a heat exchanger 32b. And then the reformed gas is led into a conduit 3k through the heat exchanger 32a. Further, the reformed gas is cooled in a cooler 36R and is led into a condensing tank 36. Condensed water is separated from the reformed gas within the condensing tank 36 and is discharged from a bottom portion of the tank 36. The reformed gas from which the condensed water is separated, is led into a pressure-swinging adsorbing apparatus 37 through a conduit 3n and carbon dioxide in the reformed gas is removed by adsorption therein.

That is, the apparatus 37 is filled with molecular sieves as adsorbent. Plural adsorbing towers, adsorbing carbon dioxide under a pressure of 0.49 to 7.84MPa (5 to 80 kg/cm ²) and evolving the adsorbed carbon dioxide under atmospheric pressure or a reduced pressure, are arranged within the apparatus 37. These adsorbing towers are by turns used. The evolved carbon dioxide is discharged through a conduit 3p and the reformed gas from which carbon dioxide is removed, is extracted through a conduit 3q.

The reformed gas from which carbon dioxide is removed, is led into the heat exchanger 32b through the conduit 3q and is pre-heated therein. And then the reformed gas is led into a methanation reactor 38 which is a multi-tubular reactor, through a conduit 3r. The inside of reaction tubes 38T arranged within the methanation reactor 38, are filled with catalysts for methanation reaction and the inside of a jacket 38J is flowed with hot water or steam for coolant. The hot water or the steam circulates through the jacket 38J by internal cooling means 38C.

That is, the reformed gas from which carbon dioxide is removed, contacts with the catalysts in the reaction tubes 38T, and hydrogen, carbon monoxide and carbon dioxide, which are contained in the reformed gas, are converted into methane with the above reaction equations (2) and (4), and so the heating value of the reformed gas increases. The catalysts used for the methanation reaction, and a temperature and pressure of the methanation reaction are similar to those for the above first embodiment.

In this embodiment, the methanations of hydrogen and carbon monoxide are carried out after removing carbon dioxide. It is different from the above first embodiment which carries out the methanations before removing carbon dioxide. Both "after" and "before" may be adopted in principle. However, in the case that the concentration of carbon dioxide is higher than that of hydrogen and carbon monoxide, the methanations of hydrogen and carbon monoxide can be efficiently carried out when removal of carbon dioxide is carried out before the methanations. On the contrary, in the case that the concentrations of hydrogen and carbon monoxide are higher than that of carbon dioxide, methanizing hydrogen and carbon monoxide before removing carbon dioxide, can decrease the losses of hydrogen and carbon monoxide on the removing process of carbon dioxide and can methanize also carbon dioxide at the same time.

The reformed gas extracted from the methanation reactor 38 is led into a cooler 39R through a conduit 3s and is cooled therein. And then the reformed gas is led into a condensing tank 39 and condensed water is separated from the reformed gas. The condensed water is discharged from a bottom portion of the condensing tank 39. The reformed gas from which the condensed water is separated, is extracted as a source for town gas, through a conduit 3u. The heating value of the reformed gas is controlled so as to be town gas, by addition of DME as a carburant on the way of the conduit 3u. That is, the DME is led into an evaporator 30 from the DME storage 31, through a conduit 3z which branches off from the conduit 3a. And then the DME is evaporated in the evaporator 30 and is led into the conduit 3u in which the reformed gas flows, through a valve 30V.

Next, process simulations and experimental reactions according to the above first, second and third embodiments will be described.

### (Example 1)

First, there will be described an example of producing town gas by supplying DME at a rate of 400 kg-mol/h (18400 kg/h), according to the first embodiment with reference to Fig.1. In this example, the steam is introduced at a rate of 1000 kg-mol/h (18000 kg/h) and the DME is introduced divisionally to the first and second reforming reactors at a rate of 200 kg-mol/h (9200 kg/h), respectively.

### ① The first reforming reactor

The first reforming reactor is an adiabatic reactor. Its inlet pressure is 1.96 MPa (20 kg/cm ²), as gauge pressure, and its inlet temperature is 300 °C. A reaction experiment is carried out under the following conditions, using a feed gas which has such compositions as indicated by [1 e] in Table 2;

Catalyst : Compositions of the catalyst are nickel of 60 wt% in the form of NiO, cerium of 25 wt% in the form of CeO₂ and alumina of 15 wt%. The catalyst is formed from powdery state into the pellets having 3 mm in diameter and 3 mm in length (hereafter the catalyst formed under the above conditions, is named "Catalyst A"). The amount of the catalyst is 200 cm³.

W/F: W/F is 0.5 kg-catalyst · h/kg-DME.

W/F represents the weight of the catalyst (kg) per supply ratio of unit weight of DME or crude DME (kg/h). The same definition is used in the following examples.

Reactor : The reactor is made of stainless steel, which has an adiabatic structure substantially shutting out the exchange of heat with the outside. Its internal diameter is 21.4 mm and its length is 1.5 m. In order to measure the temperature distribution of catalyst layer with thermocouple, a tube made of stainless steel is inserted into the center of the reactor. The tube has an external diameter 3 mm and an internal diameter 2 mm. The reactor as above described will be defined as an "Experimental Reactor A".

**(Table 2) Example of material balance according to first embodiment.**

| | 1e | 1f | | 1g | | 1k | | 1m | | 1r | |
|---|---|---|---|---|---|---|---|---|---|---|---|
| | inlet gas of first reforming reactor | outlet gas of first reforming reactor | | inlet gas of second reforming reactor | | outlet gas of second reforming reactor | | outlet gas of methanation reactor | | source gas for town gas | |
| | [kg·mol/h] | [kg·mol/h] | [mol%] | [kg·mol/h] | [mol%] | [kg·mol/h] | [mol%] | [kg·mol/h] | [mol%] | [kg·mol/h] | [mol%] |
| DME | 200.0 | 0.0 | 0.0 | 200.0 | 11. 7 | 0.0 | 0.0 | 0.0 | 0.0 | 0.0 | 0.0 |
| CH₃OH | 0.0 | 0.0 | 0.0 | 0.0 | 0.0 | 0.0 | 0.0 | 0.0 | 0.0 | 0.0 | 0.0 |
| CH₄ | 0.0 | 246.8 | 16.4 | 246.8 | 14.5 | 532.3 | 27.5 | 583.2 | 31.8 | 583.2 | 86.7 |
| H₂ | 0.0 | 203.6 | 13.5 | 203.6 | 11.9 | 250.8 | 13.0 | 66.1 | 3.6 | 66.1 | 9.8 |
| CO | 0.0 | 9.3 | 0.6 | 9.3 | 0.5 | 20.1 | 1.0 | 1.3 | 0.1 | 1.3 | 0.2 |
| CO₂ | 0.0 | 143.9 | 9.6 | 143.9 | 8.4 | 247.6 | 12.8 | 215.6 | 11.8 | 19.0 | 2.8 |
| H₂O | 1000.0 | 902.9 | 59.9 | 902.9 | 52.9 | 884.7 | 45.7 | 967.6 | 52.8 | 3.4 | 0.5 |
| TOTAL | 1200.0 | 1506.4 | 100.0 | 1706.4 | 100.0 | 1935.5 | 100.0 | 1833.7 | 100.0 | 672.9 | 100.0 |
| temperature (°C) | 300 | 545 | | 285 | | 545 | | 280*/400 | | 40 | |
| pressure (kg/cm²G) | 20.0 | | | 18.5 | | | | 17.0** | | 14.0 | |

| | | | | | | | | | | | |
|---|---|---|---|---|---|---|---|---|---|---|---|
| * inlet temperature ** inlet pressure | | | | | | | | | | | |

Previous to the reaction, the pretreatment of Catalyst A is carried out by a flow of hydrogen at a temperature of 350 °C for eight hours under the atmospheric pressure. As the result of the reaction under the condition of an inlet temperature 300 °C of the reactor, the temperature of the exit of the catalyst layer rises to 545 °C. Further, as the result of analysis of the compositions of the outlet gas of the reactor, it proves that all of the DME reacts and the outlet gas has such flow rate and composition as indicated by [1f] in Table 2.

### ② The second reforming reactor

The second reforming reactor is an adiabatic reactor similarly to the first reforming reactor. Its inlet pressure is 1.813 MPa (18.5 kg/cm²), as gauge pressure. A reaction experiment is carried out under the condition that a feed gas has such flow rate and composition as indicated by [1g] in Table 2, which is the gas indicated by [1f], adding DME at a rate of 200 kg-mol/h. Catalyst A of 200 cm³ is packed into Experimental Reactor A. W/F is 0.5 kg-catalyst · h/kg-DME. Previous to the reaction, the pretreatment of Catalyst A is carried out by a flow of hydrogen at a temperature 350 °C for eight hours under the atmospheric pressure.

As the result of the reaction under the condition of an inlet temperature of 285 °C of the reactor, the temperature of the exit of the catalyst layer rises to 545 °C equal to that in the first reforming reactor. Further, as the result of analysis of the compositions of the outlet gas of the reactor, it proves that all of the DME react and the outlet gas has such flow rate and composition as indicated by [1k] in Table 2.

### ③ The methanation reactor

A reaction experiment is carried out under the condition that a feed gas has such flow rate and composition as indicated by [1 k] in Table 2 and that gas from the second reforming reactor is cooled to 280 °C and that the inlet pressure of the methanation reactor which is an adiabatic reactor is 1.666 MPa (17 kg/cm²), as gauge pressure.

Catalyst of 50 cm³ is packed into Experimental Reactor A. Compositions of this catalyst are nickel of 35 wt% in the form of NiO, magnesium of 12 wt% in the form of MgO and alumina of 53 wt%. The catalyst is formed from powdery state into the pellet having 3 mm in diameter and 3 mm in length.

Feed gas supply rate under the normal condition (m³/h) per unit volume of catalyst layer (m³) is 15000 h⁻¹.

Previous to the reaction, the pretreatment of the catalyst is carried out by a flow of hydrogen at a temperature 280 °C for eight hours under the atmospheric pressure. As the result of the reaction under the condition of an inlet temperature 280 °C of the reactor, the temperature of the exit of the catalyst layer rises to 400 °C. Further, as the result of analysis of the compositions of the outlet gas of the reactor, it proves that the outlet gas has such flow rate and composition as indicated by [1 m] in Table 2.

### ④ Removal of carbon dioxide

A process simulation, cooling the outlet gas of the methanation reactor and removing carbon dioxide with the absorbing tower in which the number of the theoretical plates is fifteen, is carried out. Mono ethanolamine solution is used for absorbent. Ratio of removed carbon dioxide in the reformed gas is 91.2 % under the condition that the temperature of the top of the absorbing tower is 40 °C and that the pressure in the tower is 1.372 MPa (14 kg/cm²), as gauge pressure. It proves that source for town gas has such flow rate and composition as indicated by [1r] in Table 2.

Flow rate of the source for town gas to be obtained under the normal condition is 360000 m³ a day.

### (Example 2)

Next, there will be described an example of producing town gas by supplying crude DME, containing DME of 65 wt% and methanol of 9 wt% and water of 26 wt%, at a rate of 28200 kg/h, according to the second embodiment with reference to Fig.2. In this example, rate of DME contained in the feed gas is 400 kg-mol/h (18400 kg/h) and no steam is introduced from the outside.

### ① Reforming reactor

The reforming reactor is a fluidized bed reactor having internal cooling means. Its inlet pressure is 2.94 MPa (30 kg/cm²), as gauge pressure, and its inlet temperature is 300 °C. A reaction experiment, using a feed gas having such composition as indicated by [2c] in Table 3, is carried out under the following condition ;

Catalyst : Catalyst containing ruthenium of 2 wt%, is supported by alumina powder having a mean particle size 80 micrometers. The amount of the packed catalyst is 1500 cm³.

Reactor : A main body of the reactor is made of stainless steel. Its internal diameter is 53.1 mm and its height is 1.5 m. A sintered metal filter is welded to the lower part of the reactor in order to distribute a feed gas uniformly into the catalyst layer. An enlarged part is formed at the upper part of the reactor in order to prevent from the powder of the catalyst to scatter out. Its internal diameter is 102.3 mm and its height is 70 cm. An internal cooler which is a coiled tube made of stainless steel, is arranged in the reactor, in order to cool the reactor by circulating hot water at a temperature of 140 °C. Its total length of the tube is 7 m, and its external diameter is 3 mm and its internal diameter is 2 mm. A tube made of stainless steel is inserted into the center of the reactor in order to measure the temperature distribution of the catalyst layer with thermocouple. The external diameter of the tube is 3 mm and its internal diameter is 2 mm.

W/F : W/F is 2.0 kg-catalyst · h / kg- crude DME.

**(Table 3) Example of material balance accoding to second embodiment.**

| | 2c | | 2 d | | 2 n | |
|---|---|---|---|---|---|---|
| | inlet gas of reforming reactor | | outlet gas of reforming reactor | | source gas for town gas | |
| | [kg·mol/h] | [mol%] | [kg·mol/h] | [mol%] | [kg·mol/h] | [mol%] |
| DME | 400.0 | 46.5 | 0.0 | 0.0 | 0.0 | 0.0 |
| CH₃OH | 80.0 | 9.1 | 0.0 | 0.0 | 0.0 | 0.0 |
| CH₄ | 0.0 | 0. 0 | 657.1 | 49.6 | 635.9 | 98. 3 |
| H₂ | 0.0 | 0.0 | 11.5 | 0.9 | 0.0 | 0.0 |
| CO | 0.0 | 0.6 | 0.2 | 0.0 | 0.0 | 0.0 |
| CO₂ | 0. 0 | 0.0 | 222.7 | 16.8 | 11.1 | 1.7 |
| H₂O | 400.0 | 45.5 | 434.4 | 32.8 | 0.0 | 0.0 |
| TOTAL | 880.0 | 100.0 | 1325.9 | 100.00 | 647.0 | 100.0 |
| temperature (°C) pressure (kg/cm²G) | 300 | | 330 | | 40 | |
| | 30.0 | | | | 25.0 | |

As the result of the reaction without the pretreatment of the catalyst, the temperature of all of the catalyst layer is uniformly 330 °C. As the result of analysis of the composition of the outlet gas of the reactor, DME and methanol react and it proves that the outlet gas has such flow rate and composition as indicated by [2d] in Table 3.

### ① Removal of carbon dioxide

A process simulation of the removal of carbon dioxide with the hollow fiber-membrane made of polyimide, is carried out under the condition that the outlet gas of the reforming reactor is cooled down to 40 °C and that the pressure of the outlet gas is 2.45 MPa (25 kg/cm²), as gauge pressure. In result, it proves that source gas for town gas has such flow rate and composition as indicated by [2n] in Table 3, is obtained.

Flow rate of source for town gas to be obtained under the normal condition is 350000 m³ a day.

### (Example 3)

Next, there will be described an example for producing town gas by supplying DME at a rate of 400 kg-mol/h (18400 kg/h) according to the third embodiment with reference to Fig.3. In this example, a rate of 600 kg-mol/h (10800 kg/h) of steam is introduced.

### ① Reforming reactor

The reforming reactor is a single-tubular reactor. The inlet pressure of the reactor is 1.47 MPa (15 kg/cm²), as gauge pressure, and its inlet temperature is 300 °C. A reaction experiment is carried out, using a gas having such composition as indicated by [3e] in Table 4, under the following condition.

Catalyst : Catalyst containing ruthenium of 2 wt%, is supported by alumina extruded with a diameter 3 mm and a length 8 m. The amount of the catalyst is 200 cm³.

W/F : W/F is 1.5 kg-catalyst · h / kg-DME.

Reactor : Reaction tube is made of stainless steel. Its internal diameter is 21.4 mm and its length is 1.5 m. A jacket made of stainless steel is arranged at the outside of the reaction tubes. Its internal diameter is 81.1 mm. The reactor is so substantially isothermal that the reaction heat is eliminated by circulating hot water at a temperature 140 °C into the jacket. A stainless steel tube is inserted into the center of the reactor in order to measure the temperature distribution of the catalyst layer with thermocouple. The external diameter of the tube is 3 mm and its internal diameter is 2 mm. The reactor as above described will be defined as Experimental Reactor C.

**(Table 4) Example of material balance according to third embodiment**

| | 3e | | 3h | | 3q | | 3s | | 3u | |
|---|---|---|---|---|---|---|---|---|---|---|
| | inlet gas of reforming reactor | | outlet gas of reforming reactor | | outlet gas of PSA | | outlet gas of methanation reactor | | source gas for town gas | |
| | [kg · mol/h] | [mol%] | [kg · mol/h] | [mol%] | [kg · mol/h] | [mol %] | [kg · mol/h] | [mol%] | [kg · mol/h] | [mol%] |
| DME | 400.0 | 40.0 | 0.0 | 0.0 | 0.0 | 0.0 | 0.0 | 0.0 | 0.0 | 0.0 |
| CH₃OH | 0.0 | 0.0 | 0.0 | 0.0 | 0.0 | 0.0 | 0.0 | 0.0 | 0.0 | 0.0 |
| CH₄ | 0.0 | 0.0 | 593.5 | 42.0 | 563. 9 | 92.5 | 569.4 | 95.1 | 569.4 | 96.1 |
| H₂ | 0.0 | 0.0 | 25.4 | 1.8 | 24.2 | 4.0 | 2.4 | 0.4 | 2.4 | 0.4 |
| CO | 0.0 | 0.0 | 0.4 | 0.0 | 0.4 | 0.1 | 0.1 | 0.0 | 0.1 | 0.0 |
| CO₂ | 0.0 | 0.0 | 206.0 | 14.6 | 21.2 | 3.5 | 16.0 | 2.7 | 16. 0 | 2.7 |
| H₂O | 600.0 | 60.0 | 587.5 | 41.6 | 0.0 | 0.0 | 10.7 | 1.8 | 4.4 | 0.7 |
| TOTAL | 1000.0 | 100.0 | 1412.9 | 100.0 | 609.7 | 100.0 | 598.6 | 100.0 | 592.3 | 100.0 |
| temperatuer (°C) | 300 | | 350 | | 40 | | 300*/300 | | 40 | |
| pressure (kg/cm²G) | 15.0 | | | | 13.0 | | 10** | | 9.0 | |

| | | | | | | | | | | |
|---|---|---|---|---|---|---|---|---|---|---|
| * inlet temperature ** inlet pressure | | | | | | | | | | |

As the result of reaction without the pretreatment of the catalyst, the temperature of gas at the exit of the catalyst layer rises up to 350 °C. As the result of analysis of the composition of the outlet gas of the reactor, all of DME react and it proves that the outlet gas has such flow rate and composition as indicated by [3h] in Table 4.

### ② Removal of carbon dioxide

A process simulation of the removal of carbon dioxide with pressure swinging adsorbing (PSA) method, is carried out under the condition that the outlet gas of the reforming reactor is cooled down to 40 C and that the pressure in the pressure swinging adsorbing apparatus is 1.274 MPa (13 kg/cm²), as gauge pressure. As the result, it proves that source for town gas has such flow rate and composition as indicated by [3q] in Table 4.

### ③ Methanation reactor

A reaction experiment is carried out under the condition that a feed gas has such composition as indicated by [3q] in Table 4, and that gas from the pressure swinging adsorbing apparatus is heated up to 300 °C and that the inlet pressure of methanation reactor which is a single-tubular reactor, is 0.98 MPa (10 kg/cm²), as gauge pressure.

Catalyst of 150 cm³ is packed into Experimental Reactor C. Compositions of this catalyst contains nickel of 10 wt% in the form of NiO and barium of 3 wt% in the form of BaO, which supported by alumina carrier extruded with a diameter 3 mm and a length 8 mm.

Feed gas supply rate under the atmospheric condition (m³/h) per unit volume of catalyst layer (m³) is 5000 per hour.

Previous to the reaction, the pretreatment of the catalyst is carried out by a flow of hydrogen at a temperature 300 °C for eight hours under the atmospheric pressure. As the result of the reaction under the condition of an inlet temperature 300 °C of the reactor, the temperature of the catalyst layer is 300 °C.

As the result of analysis of the compositions of the outlet gas of the reactor, it proves that the outlet gas has such flow rate and compositon as indicated by [3s] in Table 4.

And it proves that source for town gas has such composition as indicated by [3u] in Table 4, by cooling the outlet gas of the methanation reactor to 40 °C and that flow rate of source gas to be obtained under the normal condition is 320000 m³ a day.

### Effect of Invention

This invention is practised as the above description. Hence, this invention has such effect as following description.

According to the method for producing town gas, of claim 1, it is efficient from view of transportation of feed stock since water is not produced on reforming reaction of dimethyl ether which is feed stock. Accordingly, extra heat energy corresponding to water is not needed when evaporating feed stock. Further, the facilities for desulfurization, for supply of hydrogen used for the desulfurization process and for recycling the hydrogen are unnecessary since sulfur component is not contained in dimethyl ether. Furthermore, small or medium-sized businesses can be carried out by the method of this invention to produce and supply town gas or substitute natural gas alternatively for LNG since cryogenic storage facilities are unnecessary.

In the method for producing town gas, of claim 2, there can be suppressed the excess temperature rise of the reaction system due to the heat of the reforming reactor of dimethyl ether and the extra consumption of heat energy needed to heat the feed stock supplied into the reforming reactor, or to cool the gas reformed in the reforming reactor, since quantity of the coexisting steam is controlled within a proper range. Furthermore, there can be suppressed the extra consumption of heat energy needed to heat the feed stock, or to cool the reformed gas, in the case that quantity of the steam is large.

In the method for producing town gas, of claim 3, there can be smoothly proceeded the reforming reaction of dimethyl ether and there can be prevented the deactivation of the catalyst since the temperature of reaction system is controlled within a predetermined range.

In the method for producing town gas, of claim 4, there can be produced town gas with reactor having simplified equipment since adiabatic fixed bed reactors are plurally and serially installed through cooling means between the reactors for reforming reaction of dimethyl ether and dimethyl ether is supplied into the reactors so as to suppress the temperature rise with heat of the reaction.

In the method for producing town gas, of claim 5, there can be produced town gas with a single reactor since a fluidized bed reactor or a multi-tubular reactor, which can efficiently remove the heat of reaction, is used for reforming dimethyl ether, which is an exothermic reaction.

In the method for producing town gas, of claim 6, there can be increased the heating value per unit volume of the reformed gas since carbon dioxide which is an incombustible gas, is removed from the reformed gas.

In the method for producing town gas, of claim 7, there can be stabilized the operation of the producing process of town gas since proven method is adopted for the removal of carbon dioxide.

In the method for producing town gas, of claim 8, there can be increased the heating value of the reformed gas since hydrogen, carbon monoxide and carbon dioxide, which are contained in the reformed gas, are methanized besides carbon dioxide is removed form the reformed gas.

In the method for producing town gas, of claim 9, the heating value of town gas as final product, can be adapted to a predetermined value controlling quantity of carburant to add in the reformed gas.

## Claims

1. A method for producing town gas comprising the steps of:
(A) preparing dimethyl ether as feed stock;
(B) evaporating said dimethyl ether; and
(C) reforming said dimethyl ether with steam in the presence of catalyst to produce reformed gas containing mainly methane, wherein the catalyst contains ruthenium or the catalyst contains nickel, cerium and alumina.

2. A method for producing town gas according to claim 1, in which the quantity of said steam on reforming is within 10/1 to 0.5/1 molar ratio of steam/dimethyl ether.

3. A method for producing town gas according to claim 1, in which the temperature for catalytic reforming of said dimethyl ether is within 200 °C to 600°C.

4. A method for producing town gas according to claim 1, in which said dimethyl ether is supplied to serially installed adiabatic fixed bed reactors by one of the following steps:
(1) passing cooling means installed between said reactors, said dimethyl ether is supplied serially to said reactors;
(2) a part of divided dimethyl ether is supplied to said reactors serially, and at the same time, the remaining part of said divided dimethyl ether is supplied to a subsequent reactor or reactors.

5. A method for producing town gas according to claim 1, in which said dimethyl ether is reformed with a fluidized bed reactor or a multi-tubular reactor.

6. A method for producing town gas according to claim 1, in which carbon dioxide by-produced in the reforming process of said dimethyl ether is removed from said reformed gas after reforming said dimethyl ether.

7. A method for producing town gas according to claim 6, in which said carbon dioxide is removed from said reformed gas by using one of the following steps:
(1) absorption by aqueous alkanolamine solution or heated aqueous potassium carbonate solution;
(2) adsorption by a pressure swinging method;
(3) selective separation by a membrane.

8. A method for producing town gas according to claim 6, in which hydrogen, carbon monoxide and carbon dioxide, which are by-produced in said reforming process, are methanized either before or after removing said carbon dioxide.

9. A method for producing town gas according to claim 1, in which a part of said dimethyl ether is added to said reformed gas as a carburant.

## Patentansprüche

1. Verfahren zur Herstellung von Stadtgas, welches die folgenden Stufen umfaßt:
(A) Herstellen von Dimethylether als Ausgangsmaterial,
(B) Verdampfen des Dimethylethers und
(C) Reformieren des Dimethylethers mit Dampf in der Gegenwart von Katalysator unter Erzeugung von reformiertem Gas, welches hauptsächlich Methan enthält, wobei der Katalysator Ruthenium enthält oder der Katalysator Nickel, Cer und Aluminiumoxid enthält.

2. Verfahren zur Herstellung von Stadtgas nach Anspruch 1, wobei die Menge des Dampfes beim Reformieren im Bereich eines molaren Verhältnisses von Dampf/Dimethylether von 10/1 bis 0,5/1 liegt.

3. Verfahren zur Herstellung von Stadtgas nach Anspruch 1, wobei die Temperatur für das katalytische Reformieren des Dimethylethers zwischen 200°C und 600°C beträgt.

4. Verfahren zur Herstellung von Stadtgas nach Anspruch 1, wobei der Dimethylether mittels einer der folgenden Stufen hintereinander angeordneten adiabatischen Festbettreaktoren zugeführt wird:
(1) unter Vorbeiströmen an zwischen den Reaktoren installierten Kühlvorrichtungen wird der Dimethylether den Reaktoren nacheinander zugeführt,
(2) ein Teil des aufgeteilten Dimethylethers wird den Reaktoren nacheinander zugeführt, und gleichzeitig wird der verbleibende Teil des aufgeteilten Dimethylethers einem nachfolgenden Reaktor oder Reaktoren zugeführt.

5. Verfahren zur Herstellung von Stadtgas nach Anspruch 1, wobei der Dimethylether mit einem Wirbelbettreaktor oder einem Mehrfach-Röhrenreaktor reformiert wird.

6. Verfahren zur Herstellung von Stadtgas nach Anspruch 1, wobei Kohlendioxid, welches in dem Reformierungsprozeß des Dimethylethers als Nebenprodukt gebildet wird, nach dem Reformieren des Dimethylethers aus dem reformierten Gas entfernt wird.

7. Verfahren zur Herstellung von Stadtgas nach Anspruch 6, wobei das Kohlendioxid unter Verwendung einer der nachfolgenden Stufen aus dem reformierten Gas entfernt wird:
(1) Absorption mittels wäßriger Alkanolaminlösung oder erhitzter wäßriger Kaliumcarbonatlösung,
(2) Adsorption mittels eines Druck-Schwing-Verfahrens,
(3) selektive Abscheidung mittels einer Membran.

8. Verfahren zur Herstellung von Stadtgas nach Anspruch 6, wobei Wasserstoff, Kohlenmonoxid und Kohlendioxid, die während des Reformierungsprozesses als Nebenprodukte gebildet werden, entweder vor oder nach dem Entfernen von Kohlendioxid methanisiert werden.

9. Verfahren zur Herstellung von Stadtgas nach Anspruch 1, wobei ein Teil des Dimethylethers als Vergaserkraftstoff zu dem reformierten Gas zugegeben wird.

## Revendications

1. Procédé de production de gaz de ville comprenant les étapes de :
(A) préparation d'éther de diméthyle comme charge d'alimentation ;
(B) évaporation dudit éther de diméthyle ; et
(C) reformage dudit éther de diméthyle avec de la vapeur d'eau en présence d'un catalyseur pour produire un gaz reformé contenant principalement du méthane, dans lequel le catalyseur contient du ruthénium ou bien le catalyseur contient du nickel, du cérium et de l'alumine.

2. Procédé de production de gaz de ville selon la revendication 1, dans lequel la quantité de ladite vapeur d'eau lors du reformage se situe dans un rapport molaire vapeur d'eau/éther de diméthyle de 10/1 à 0,5/1.

3. Procédé de production de gaz de ville selon la revendication 1, dans lequel la température pour le reformage catalytique dudit éther de diméthyle est comprise entre 200°C et 600°C.

4. Procédé de production de gaz de ville selon la revendication 1, dans lequel ledit éther de diméthyle est fourni à des réacteurs adiabatiques à lit fixe installés en série par l'une des étapes suivantes :
(1) en passant par un moyen de refroidissement installé entre lesdits réacteurs, ledit éther de diméthyle est fourni en série auxdits réacteurs ;
(2) une partie de l'éther de diméthyle divisé est fournie en série auxdits réacteurs, et, en même temps, la partie restante dudit éther de diméthyle divisé est fournie à un ou à plusieurs réacteurs subséquents.

5. Procédé de production de gaz de ville selon la revendication 1, dans lequel ledit éther de diméthyle est reformé avec un réacteur à lit fluidisé ou un réacteur multitubulaire.

6. Procédé de production de gaz de ville selon la revendication 1, dans lequel le dioxyde de carbone formé comme sous-produit dans le traitement de reformage dudit éther de diméthyle est éliminé dudit gaz reformé après reformage dudit éther de diméthyle.

7. Procédé de production de gaz de ville selon la revendication 6, dans lequel ledit dioxyde de carbone est éliminé dudit gaz reformé en utilisant l'une des étapes suivantes :
(1) absorption par une solution aqueuse d'alcanolamine ou une solution aqueuse chauffée de carbonate de potassium ;
(2) adsorption par une technique d'oscillation de pression ;
(3) séparation sélective par une membrane.

8. Procédé de production de gaz de ville selon la revendication 6, dans lequel l'hydrogène, le monoxyde de carbone et le dioxyde de carbone, qui sont formés comme sous-produits dans ledit traitement de reformage, sont méthanisés avant ou après élimination dudit dioxyde de carbone.

9. Procédé de production de gaz de ville selon la revendication 1, dans lequel une partie dudit éther de diméthyle est ajoutée audit gaz reformé comme carburant.
